# EUROPEAN PATENT APPLICATION

(11) **EP 3 207 804 A1**
(43) Date of publication of application: **23.08.2017**
(21) Application number: 15851136.0
(22) Date of filing: 13.10.2015
(51) Int. Cl.: A21C 15/04

(54) **CUTTING SYSTEM FOR A PRODUCT**

(30) Priority: 14.10.2014 ES 201431501
(71) Applicant: Construcciones Mecanicas Gonver, S.L., 41560 Estepa (Sevilla) (ES)
(72) Inventor: GONZÁLEZ CABALLERO, José Antonio, E-41560 Estepa (Sevilla) (ES)
(74) Representative: Carvajal y Urquijo, Isabel
(86) International application number: PCT/ES2015/070737
(87) International publication number: WO 2016/059276

(57) **Abstract**

Cutting system for a product comprising longitudinal transport means (2.1,3.4) of the product (3.6); means for detecting the position (2.3) of the product (3.6); cutting means (2.4,2.5) of the product (3.6). In coordination with the means of detection, the cutting means are activated. Said cutting means comprise a first disc (2.4) configured to rotate and move transversally in the advancing direction and make the transversal cut of the product (2.3). If necessary for obtaining the desired size, second discs (2.5) cut the portions longitudinally to form bars. The entire process is carried out with a minimum guided path, without changing direction and in one direction only. This allows a product with a better finish and in lesser time.

## Description

### Technical field of the invention

The invention relates to a system for cutting products in sheets, preferably foodstuffs with wafer or slab shapes.

### Background of the invention

Machines are known that carry out the manufacturing of this type of product made up of batches of wafers with layers of filling between them.

The path of the conventional machines is not longitudinally continuous, for which reason the products trace a double "L" movement in their displacement. The handling of a product that is delicate and fragile by nature, such as wafers, makes that the finish of many of the resulting pieces ends up being defective.

Any small displacement that the products may undergo during the cutting brings about significant defects in the final product. For example, causing its visual appearance to look less appealing, and generating greater problems when the product is filled (it can leak and come out). Often, these defects lead to the wastage of the defective units, even if they only affect their appearance.

### Summary of the invention

In light of the limitations of the current known machines, a system that would avoid these problems would be desirable.

To do so, we propose a system that is capable cutting the products in a fixed position, minimizing movements in order to prevent the final product from being defective. For example, if the product includes superimposed wafers, these can easily slide over each other. Furthermore, the manufacturing speed is substantially enhanced and thus, performance is increased and costs are minimized.

The system object of the invention can correct the visual deficiencies and save time and cost of manufacturing the products.

The cutting system for a product includes longitudinal transport means of the product, means for detecting the position of the product and cutting means. In coordination with the means of detection, the cutting means are activated. The cutting means include a first disc for rotating and moving transversally in the advancing direction and making the transversal cut of the product.

Optionally, the cutting means further comprise a second fixed disc configured to be activated and rotate, in coordination with the longitudinal transport means, and carry out the longitudinal cut of the product when it is displaced in the advancing direction.

Optionally, the longitudinal transport means comprise a pushing arm to displace the product by pushing it from its rear part.

Optionally, the pushing arm is connected to a longitudinal rail mounted thereon.

Optionally, the longitudinal transport means comprise a conveyor belt.

Optionally, the system further comprises guiding means for maintaining the orientation of the product in coordination with the longitudinal transport means.

Optionally, the guiding means comprise an aligning arm for positioning on the product and securing it during displacement for it to be cut.

Optionally, the aligning arm is connected to a longitudinal rail mounted thereon.

Optionally, the guiding means comprise a pair of side guides positioned on either side of the platform to hold the product therebetween during displacement.

### Brief description of the drawings

FIG. 1 shows the chassis for supporting the invention.
FIG. 2A shows the wafer-cutting table according to the invention.
FIG. 2B shows the transversal cutting unit in greater detail.
FIG. 3A shows an example of an upper module for the displacement of the product.
Fig. 3B shows the elements for transferring the sheet of product in detail.

### Detailed description of the invention

With reference to the drawings, an exemplary embodiment is described by way of illustration of a machine for products in sheets, such as those based on a wafer filled with cream or jam, etc.

The machine is capable of operating on an assembly line and cutting bar-shaped portions, minimizing movements of the sheet in a continuous and linear manner. This achieves a better visual result of the finished product, shortening the work cycles with which benefits are obtained in time and manufacturing costs.

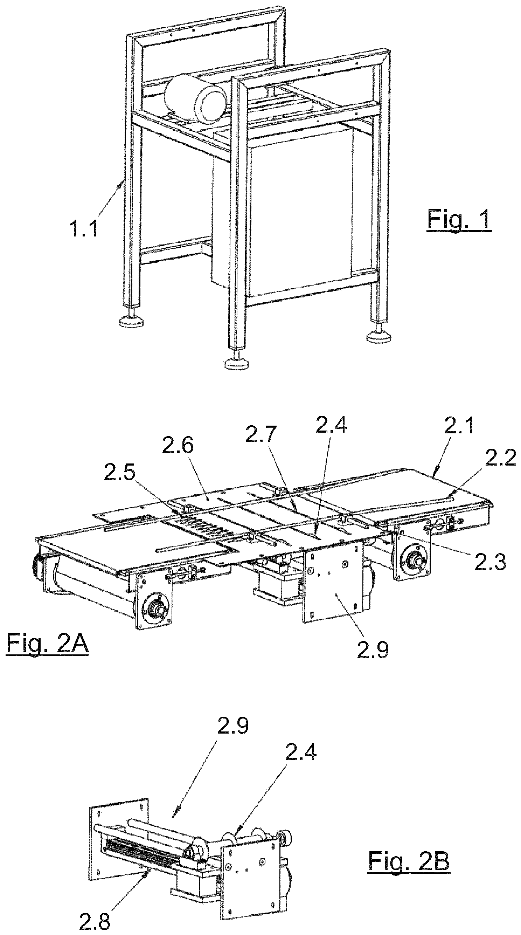

The cutting system can be arranged in a chassis **1.1** with a tubular structure such as that seen in FIG. 1 that acts as a support. The tubular structure is preferably made of stainless steel.

The feeding of wafers into the assembly line can be carried out manually or automatically, after which, a dispenser of cream or jelly jam deposits, as required, the desired amount. Subsequently, a new wafer is placed, acting as a cover or lid for the filling. It is in then that the present embodiment intervenes to cut the portions.

As mentioned, once a sheet of product **3.6** (for example, wafers with filling between layers) is prepared, it must be displaced towards a cutting table as seen in FIG. 2A. In the present embodiment, it is displaced by means of a belt or conveyor belt **2.1.** In a coordinated manner, an aligning arm **3.7** (or several) and a pushing arm **3.4** also intervene in order to pass from the belt **2.1** to the cutting platform **2.6** without the sheet of product **2.6** becoming deformed or dislodged when it is subsequently cut. The pushing arm **3.4** is lowered by lowering pistons **3.3** to the height suitable for pushing the sheet of product to the cutting platform **2.6.** Similarly, an aligning piston **3.5** lowers the aligning arm **3.7** moments later in order to accompany the movement of the sheet since both the pushing arm **3.4** and the aligning arm are attached to an upper longitudinal rail **3.1** (in the embodiment it is electric). When the product arrives at the cutting platform **2.6**, it is detected by means of a photoelectric cell **2.3**, which serves to bring the cutting system into operation.

FIG. 2B shows the transversal cutting unit in detail, where the first cutting discs **2.4** and a transversal rail **2.8** are assembled. The transversal cutting unit **2.9** is located on the cutting platform **2.6** into which some transversal grooves **2.7** have been cut through, on which the first discs **2.4** are displaced. Generally, a central disc cuts the sheet **3.6** transversally and two external discs outline the edges.

Once the transversal cut is made, portions are obtained that are usually too large. To reduce their size, second discs **2.5** distributed longitudinally in a parallel manner to the advancing direction, cut the portions to produce the final bars of product. Both disc assemblies **2.4, 2.5** protrude partially from the cutting platform **2.6** in order to duly divide the product.

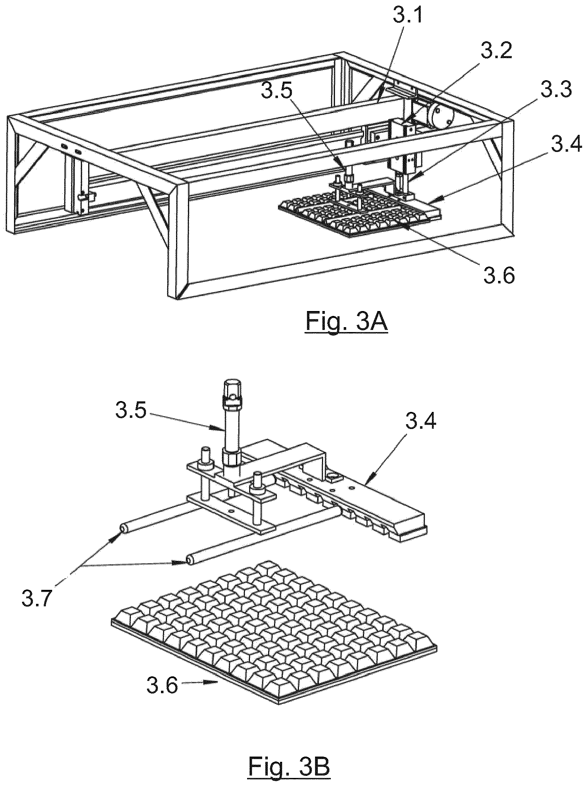

FIG. 3 shows the upper structure with the mechanisms that are coupled in a coordinated manner to the platform **2.6** (preferably made of stainless steel). In the first place, the longitudinal rail **3.1** and servo activate the first piston **3.3** of the lowering module **3.2** of the pushing arm **3.4.** A second piston **3.5** follows it in synchronized movement positioning an aligning arm **3.7** over the upper face of the packet of wafers as mentioned previously. At this point, by means of the longitudinal rail **3.1,** the entire packet of wafers is displaced to the cutting area, assisted by side guides **2.2** longitudinally located along the entire platform **2.6.**

At this moment, when the transversal cutting unit represented in FIG. 2B with its transversal rail **2.8** (preferably pneumatic type,) attached to the platform **2.6** in the lower part of the table, brings into operation a mechanism with a shaft that can house a variable number of first cutting discs **2.4**, they are displaced along the transversal grooves **2.7** in order to make the cut. In this way, the first discs **2.4** carry out a transversal displacement in the advancing direction of the table and in their movement, make the transversal cut of the wafers. Thus, a minimum movement of the product is achieved.

Once the final position of the first cutting discs **2.4** is reached, the feed order of the sheet of product **3.6** is activated up to the longitudinal cutting area. The upper longitudinal rail **3.1** with the lowering module **3.2** is responsible for moving it. In this area, another axis with a variable number of second emergent discs **2.5** (depending on the size of the desired final bar), fixed below, completes another cut by means of a mechanism similar to that mentioned previously. Later they are led to an exit belt **3.6** with a separator so that in this way the process for a new sheet can continue.

The cutting means that operate in a synchronized manner between the electric longitudinal rail **3.1**, the pneumatic transversal rail **2.8**, the cutting discs **2.4,** 2.5 and the elements to position and align it (**3.2, 3.3, 3.4, 3.5, 3.7**). The moment in which the cut needs to be made is established by means of detection for positioning the product **3.6.** In the embodiment, the means of detection comprise a photoelectric cell **2.3**, which ensures that the sheet is positioned correctly. Additionally, side guides **2.2** can be used to assist in leaving the sheet of product **3.6** in the desired position.

With the already desired size for the bars, these are passed to another conveyor belt where with help of side guides **2.2** they are separated from each other for their later treatment (e.g. for their packaging).

All of this process is carried out in a way in which the path is a minimum guided path without changing direction and in one direction only. This is what enables obtaining a product with a more perfect visual effect than that carried out by other known machines until today.

It should be understood that it is possible to use different alternatives, modifications and equivalents. Therefore, the present description should not be considered limiting of the scope of the invention that is defined by the attached claims.

### Numeric references

- 1.1: Chassis.
- 2.1: Conveyor belt.
- 2.2: Side guides.
- 2.3: Photoelectric cell.
- 2.4: First cutting discs.
- 2.5: Second cutting discs.
- 2.6: Cutting platform.
- 2.7: Grooves.
- 2.8: Transversal rail.
- 2.9: Platform.
- 3.1: Longitudinal rail.
- 3.2: Lowering module.
- 3.3: Lowering piston.
- 3.4: Pushing arm.
- 3.5: Aligning piston.
- 3.6: Sheet of product
- 3.7: Aligning arm.

## Claims

1. A cutting system for a product comprising:
- longitudinal transport means (2.1,3.4) of the product (3.6);
- means for detecting the position (2.3) of the product (3.6);
- cutting means (2.4,2.5) of the product (3.6);
**characterized in that**, in coordination with the means of detection, the cutting means are activated, said cutting means comprise a first disc (2.4), configured to rotate and move transversally in the advancing direction and make the transversal cut of the product (2.6).

2. The system according to claim 1, wherein the cutting means (2.4,2.5) further comprise a second fixed disc (2.5) configured to be activated and rotate, in coordination with the longitudinal transport means (2.1,3.4), and carry out the longitudinal cut of the product (3.6) when it is displaced in the advancing direction.

3. The system according to claim 1 or 2, wherein the longitudinal transport means (2.1,3.4) comprise a pushing arm (3.4) configured to displace the product (3.6) by pushing it from its rear part.

4. The system according to claim 3, wherein the pushing arm (3.4) is connected to a longitudinal rail (3.1) mounted thereon.

5. The system according to any one of the preceding claims, wherein the longitudinal transport means (2.1,3.4) comprise a conveyor belt (2.1).

6. The system according to any one of the preceding claims, further comprising guiding means (3.7,2.2) for maintaining the orientation of the product in coordination with the longitudinal transport means (2.1,3.4).

7. The system according to claim 6, wherein the guiding means (3.7,2.2) comprise an aligning arm (3.7) for positioning on the product (3.6), securing it during the displacement for it to be cut.

8. The system according to claim 7, wherein the aligning arm (3.7) is connected to a longitudinal rail (3.1) mounted thereon.

9. The system according to claim 6, wherein the guiding means (3.7,2.2) comprise a pair of side guides (2.2) positioned on either side of the platform (2.9) to hold the product therebetween during displacement.
